(19) **Europäisches Patentamt**

**European Patent Office**

**Office européen des brevets**

(11) Publication number: **0 315 606 B1**

(12) **EUROPEAN PATENT SPECIFICATION**

(45) Date of publication of patent specification: **26.08.92**　(51) Int. Cl.⁵: **B62D 21/00**, B62D 33/00

(21) Application number: **88830471.4**

(22) Date of filing: **03.11.88**

(54) **Connector for body and chassis of a vehicle.**

(30) Priority: **04.11.87 IT 4857487**

(43) Date of publication of application:
**10.05.89 Bulletin 89/19**

(45) Publication of the grant of the patent:
**26.08.92 Bulletin 92/35**

(84) Designated Contracting States:
**BE DE ES FR GB GR LU NL SE**

(56) References cited:
**EP-A- 0 168 348**
**DE-A- 2 949 232**
**US-A- 2 363 172**

(73) Proprietor: **OFFICINE ROMANAZZI S.p.A.**
**Via Tiburtina 1072**
**I-00156 Rome(IT)**

(72) Inventor: **Peruzzi, Luigi**
**c/o Officine Romanazzi S.p.A. Via Tiburtina 1072**
**I-00156 Rome(IT)**

(74) Representative: **de Simone, Domenico et al**
**Ing. Barzanò & Zanardo Roma S.p.A. Via Piemonte 26**
**I-00187 Roma(IT)**

## Description

This invention relates to a connector for body and chassis of a vehicle. More particularly, the object of the invention consists in a member of the type mentioned above that, in the form of a single solution, realizes the junction between cross members and side members which are below the body to be arranged and the chassis of the vehicle.

At the present time, in order to obtain a good connection of bodies of the type which is fastened to the vehicle, two different kinds of joining members are employed, respectively between the chassis and the cross members of the body, and between the chassis and the side members of the body itself.

This type of solution, though validly adopted up to the present time, shows some drawbacks both from the practical and from the structural standpoint.

Indeed, it is well evident that the realization of the junction between the body and the chassis of the vehicle employing two different junction members for each junction zone is much more difficult and complicated.

Moreover, just as a result of the presence of the two different members, no sufficient warranties are obtained from the strength standpoint, so that the height of the cross members is to be oversized.

In the US-A-2,363,172 means for mounting the body on the chassis are described, comprising angle bars fitted against the cross sills and side rails of the chassis, means for securing the angle bars to the cross sills, said angle bars having elongated openings disposed adjacent to the side rails of the chassis, bolts extending through the side rails of the chassis and passing through the elongated openings, adjustably connecting the angle bars to the chassis, horizontal flanges connecting the lower ends of the fla,ges of the angle bars, adjusting bolts extending through the horizontal flages of the angle bars, and clamps connected with the chassis side rails and through which said adjusting bolts extend connecting the angle bars and clamps, and said adjusting bolts adapted to operate to draw the angle bars and body connected therewith, towards the chassis.

Now,as it is well known, some legal constraints exist for such type of vehicles, as regards the maximum loading height, so that the possibility of carrying a load is reduced, due to the higher height of the loading platform because of the height of the cross members.

The solution suggested by the present invention refers just to such problem, said invention obviating all drawbacks mentioned above through the realization of a connection member for body and chassis of the vehicle in the form of a single piece so as to allow its realization to be obtained very easily.

Moreover, it is also an object of the present invention that of providing a connection member of the type mentioned above, which is of such structure as to show a higher strength with respect to the strength obtained with connection members employed at the present time, and so as to allow a reduction in the vertical dimension of the lower cross members of the body to be obtained and then a higher loading capacity of the vehicle as a result of lowering the loading platform.

In order to obtain the objects mentioned above, the Applicant suggests a fundamental technical teaching for the realization of a connection member through the employment of a single material sheet which is so folded as to realize three coupling sides, respectively with the cross member of the body, with the side member of the same and with the chassis of the vehicle, and so as to obtain high strength moduli.

Accordingly, it is a specific object of the present invention a connector for body and chassis of a vehicle, said connector comprising a single material member consisting of a sheet so folded as to realize a first side which is vertical with respect to the ground plane, for coupling with a reinforcing cross member provided below the body itself; a second vertical side for coupling with a reinforcing side member, said second side being at an angle of 90° with respect to said first vertical side; and a third horizontal side which forms at the lower part an angle of 90° with said first and second side and that has some means for obtaining the coupling with the chassis of the vehicle; said first and second side having vertical dimensions substantially equal to the dimension of both the side and the cross member.

Again, according to the present invention, a skew fin folded at 90° can be provided for further strength on the part of said first vertical side opposite to the part for coupling with said second side.

The coupling between said first side and said cross member, and the coupling between said second side and said side member can be obtained by welding, or through mechanical coupling (through bolts and the like).

Preferably, the coupling between said first side and the cross member is obtained through spot welding, whereas the coupling between the second side and the side member is obtained by means of bolts, preferably by means of four bolts.

Said copuling means between said third side and the chassis of the vehicle consist preferably of corresponding holes drilled in the third side and in the chassis, through which a bolt, a screw or the like are inserted.

The present invention will be disclosed in the following just for illustrative and not for limitative purposes, with particular reference to the figures of the enclosed drawings, wherein:

Figure 1 is a first perspective view of the connection member according to the present invention;

Figure 2 is a second perspective view of the connector according to the present invention;

Figure 3 is a third perspective view of the connector according to the present invention; and

Figure 4 is a perspective view of a body having connectors according to the present invention for realizing the coupling with the chassis of the vehicle.

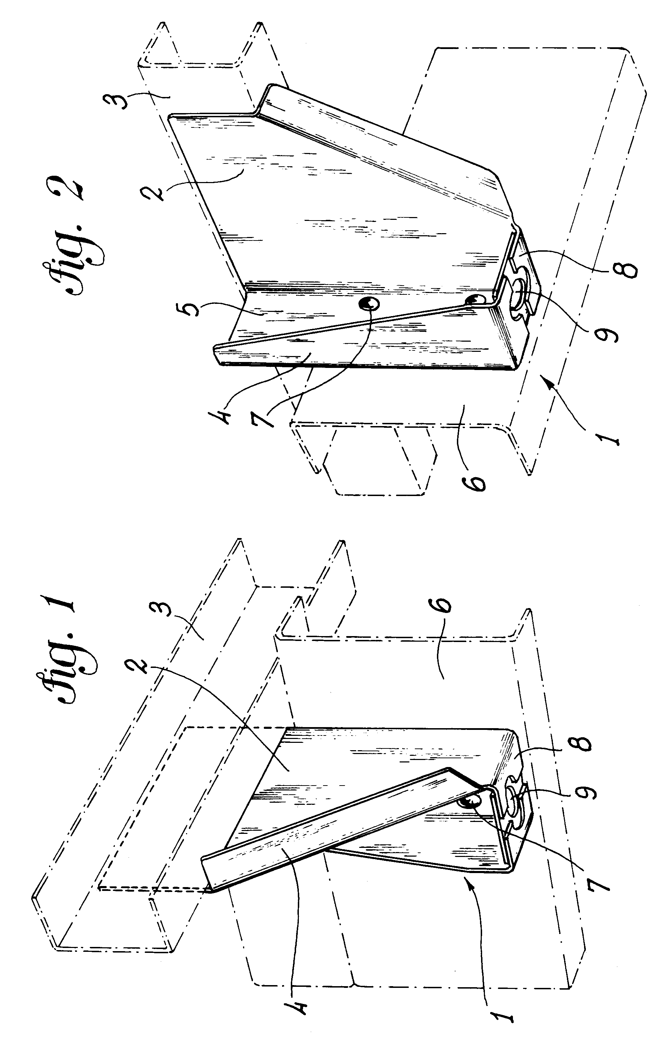

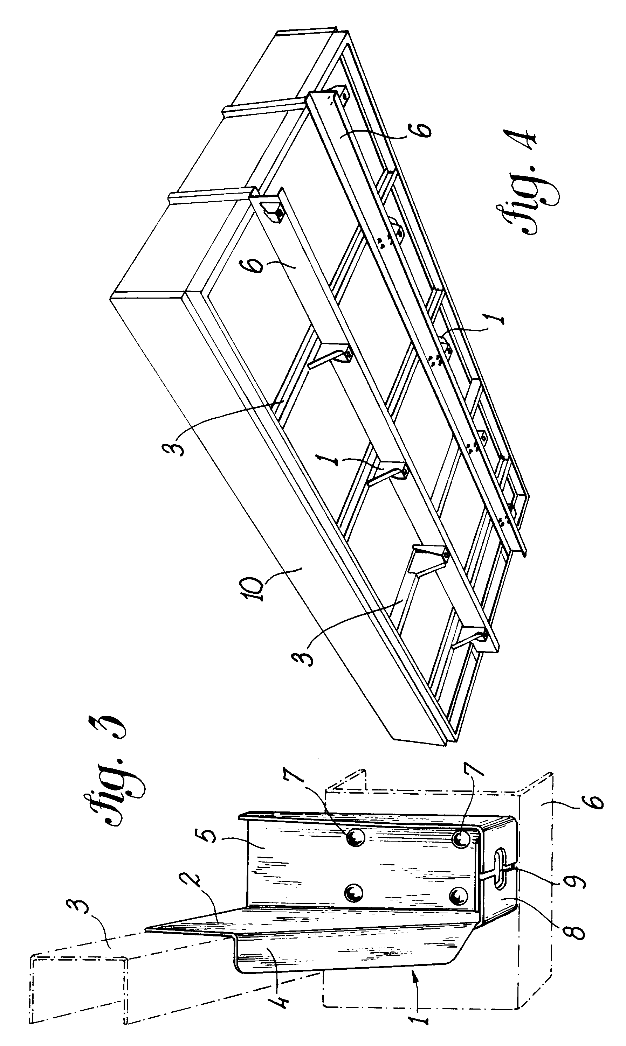

With reference now first to the Figures 1-3, it can be observed that the connector 1 according to the present invention shows a first side 2 for realizing the coupling with the cross member 3 of the body.

The lengthwise sizes of the side 2 are variable obviously according to the type of body that is to be coupled with the vehicle.

The vertical height of the side 2 gives the structure good strength characteristics so that the vertical dimension of the cross member 3 can be reduced.

The folded fin 4, though not necessary, is also realised in order to obtain better strength characteristics of the whole group.

The coupling between the side 2 and the cross member 3 is obtained, according to the embodiment shown in the figure, through spot welding, even though, as is obvious, such coupling can also be obtained employing other connection types such as for instance through bolts.

The member 1 according to the present invention is provided with a second side 5 for realizing the coupling with the side member 6 of the body.

Said side 5 is at right angles with the side 2 and is coupled to the side member 6 by means of four bolts 7.

Both the side 5 and the side 2 of the member 1 according to the present invention lie on planes which are vertical with respect to the ground.

A third side 8 is arranged between said two sides 2 and 5 and it is at right angles to both of them, said third side 8 being the proper coupling between the body-member 1 assembly and the chassis of the vehicle.

The side 8 bears a hole 9 that allows a bolt (not shown) to be inserted, said bolt being coupled with a corresponding hole in the chassis of the vehicle.

With reference now to Figure 4, a body 10 can be observed which is to be fixedly coupled to the chassis of the vehicle (not shown).

The body 10 shown in Figure 4 has two side members 6 and four cross members 3. The number of side and cross members will be obviously a function of the sizes of the body 10.

A member 1 according to the present invention is arranged at each crossing point between side members 6 and cross members 3, so that the coupling between body 10 and chassis will be simply obtained putting the bolts into the holes 9 and then into the corresponding holes (not shown) of the chassis.

## Claims

1. A connector (1) for body (10) and chassis of a vehicle characterized in that it comprises a single material member in the form of a sheet so folded as to realize a first side (2) which is vertical with respect to the ground plane, and is for the coupling with a reinforcing cross member (3) provided below the body (10), a second vertical side (5) for realizing the coupling with a reinforcing side member (6) of the body (10), said second side (5) being at an angle of 90° with respect to said first vertical side (2); and a third side (8) which is horizontal and forms at the lower part an angle of 90° with said first (2) and second (5) side and shows some means for realizing the coupling with the chassis of the vehicle; said first (2) and second (5) side having vertical dimensions substantially equal to the dimensions of the side and cross members overlapped.

2. A connector according to claim 1, characterized in that a skew fin (4) which is folded at 90° is provided for further strength on the part of said first vertical side (2) opposite to the part for realizing the coupling with said second vertical side (5).

3. A connector according to claim 1, characterized in that the coupling between said first side (2) and said cross member (3) and/or between said second side (5) and said side member (6) is obtained through welding.

4. A connector according to claim 1, characterized in that the coupling between said first side (2) and said cross member (3) and/or between said second side (5) and said side member (6) is realized through a mechanical type connection.

5. A connector according to claim 1, characterized in that the coupling between said first side (2) and said cross member (3) is obtained through spot welding, whereas the coupling between said second side (5) and said side member (6) is obtained by means of four bolts (7).

6. A connector according to claim 1, characterized in that said coupling means between said third side (8) and the chassis of the vehicle consist of some corresponding holes (9) obtained in said third side (8) as well as in the chassis itself, into which holes (9) a bolt or the like are inserted.

## Patentansprüche

1. Ein Verbindungsglied (1) fuer Wagenkasten (10) und Rahmen eines Kraftwagens, dadurch gekennzeichnet, dass es einstueckig aus einem Folienstoff hergestellt, an dem folgende Teile ausgebogen werden: ein erster Seitenteil (2), der sich senkrecht zur Grundebene erstreckt und zur Kupplung mit einem, unterhalb des Wagenkastens (10) vorgesehenen Verstaerkungs-Querstueck (3) dient; ein zweiter senkrechter Seitenteil (5) zur Kupplung mit einem Verstaerkungsseitenstueck (6) des Wagenkastens (10), wobei dieser zweite Seitenteil (5) mit dem ersten senkrechten Seitenteil (2) einen rechten Winkel bildet, und ein dritter waagerechter, einen rechten Winkel mit dem ersten (2) und zweiten (5) Seitenteil bildender Seitenteil (8), der Mittel zur Kupplung mit dem Rahmen des Kraftwagens aufweist; wobei die vorgenannten erster (2) und zweiter (5) Seitenteile senkrechte Abmessungen haben, die wesentlich den Abmessungen der uebereinanderangeordneten Seiten- und Querstuecke entsprechen.

2. Ein Verbindungsstueck gemaess Anspruch 1, dadurch gekennzeichnet, dass zur weiteren Verstaerkung ein um 90° ausgeboner Flansch an der der Verbindung mit dem vorgenannten zweiten senkrechten Seitenteil (5) gegenueberstehenden Seite des ersten senkrechten Seitenteiles (2) vorgesehen ist.

3. Ein Verstaerkungsglied gemaess Anspruch 1, dadurch gekennzeichnet, dass die Kupplung zwischen dem vorgenannten ersten Seitenteil (2) und dem vorgenannten Querstueck (3) und/oder zwischen dem vorgenannten zweiten Seitenteil (5) und dem vorgenannten Seitenstueck (6) durch Schweissen durchgefuehrt wird.

4. Ein Verbindungsstueck gemaess Anspruch 1, dadurch gekennzeichnet, dass die Kupplung zwischen dem vorgenannten ersten Seitenteil (2) und dem vorgenannten Querstueck (3) und/oder zwischen dem vorgenannten zweiten Seitenteil (5) und dem vorgenannten Querstueck (6) durch mechanische Mittel durchgefuehrt wird.

5. Ein Verbindungsstueck gemaess Anspruch 1, dadurch gekennzeichnet, dass die Kupplung zwischen dem vorgenannten ersten Seitenteil (2) und dem vorgenannten Querstueck (3) durch Punktschweissen erhalten wird, waehrend der vorgenannte zweite Seitenteil (5) mit dem vorgenannten Seitenstueck (6) durch vier Bolzen (7) gekuppelt wird.

6. Ein Verbindungsstueck gemaess Anspruch 1, dadurch gekennzeichnet, dass die vorgenannten Kupplungsmittel zwischen dem vorgenannten dritten Seitenteil (8) und dem Wagenrahmen aus einigen entsprechenden Loechern (9) in dem vorgenannten dritten Seitenteil (8) und im Wagenrahmen selbsten bestehen, wobei in diese Loecher (9) ein Bolzen o. dgl. eingesteckt wird.

## Revendications

1. Un raccord pour la carosserie (10) et le chassis d'un véhicule, caracterisé en ce qu'il comprend un élément d'un seul materiau en forme d'une feuille, qui est pliée de façon à réaliser un premier côté (2) qui est vertical par rapport au plan de base et s'étend pour le couplage avec un travers de renforcement (3) par-dessous de la carosserie (10), un deuxième côté vertical (5) pour réaliser le couplage avec un élément latéral de renforcement (6) de la carosserie (10), ledit deuxième côté formant un angle de 90° par rapport audit premier côté vertical (2); et un troisième côté (8) qui est horizontal et forme, dans la partie inférieure, un angle de 90° avec ledit premier (2) et deuxième (5) côté et présente des moyens pour réaliser le couplage avec le chassis du véhicule; lesdits premier (2) et deuxième (5) côtés ayant des dimensions verticales fondamentalement égales aux dimensions de l'élément latéral et du travers superposé.

2. Un raccord selon la revendication 1, caractérisé en ce qu' un plateau plié à 90° est prévu pour le renforcement ultèrieur dudit premier côte vertical (2), dans une positions opposée par rapport à la partie de couplage avec ledit duexième côté vertical (5).

3. Un raccord selon la revendication 1, caractérisé en ce que le couplage entre ledit premier côté (2) et ledit travers (3) et/ou entre ledit deuxième côté (5) et ledit élément latéral est réalisé par soudure.

4. Un raccord selon la revendication 1, caractérisé en ce que le couplage entre ledit premier côté (2) et ledit travers (3) et/ou entre ledit deuxième côté (5) et ledit traverse (6) est réalisé au moyen d'un joint de type mécanique.

5. Un raccord selon la revendication 1, caractérisé en ce que le couplage entre ledit premier côté (2) et ledit travers (3) est réalisé par soudure par points, tandis que le couplage entre ledite deuxième côté (5) et ledit élément latéral (6) est réalisé au moyen de quattre boulons (7).

6. Un raccord selon la revendication 1, caractérisé en ce que lesdits moyens de couplage entre ledit troisième côté (8) et le chassis du véhicule consistent en des trous correspondants réalisés dans ledit troisième côté (8) ainsi que dans le chassis même, trous dans lesquells est inséré un boulon ou pareil.

*Fig. 1*

*Fig. 2*

EP 0 315 606 B1

*Fig. 3*

*Fig. 4*

EP 0 315 606 B1